# EUROPEAN PATENT APPLICATION

(11) **EP 4 309 541 A1**
(43) Date of publication of application: **24.01.2024**
(21) Application number: 22185989.5
(22) Date of filing: 20.07.2022
(51) Int. Cl.: A45C 11/04, G02C 5/14, G02C 5/22, G02C 5/00

(54) **EYEWEAR DEVICE**

(71) Applicant: Nokia Technologies Oy, 02610 Espoo (FI)
(72) Inventor: RADIVOJEVIC, Zoran, Cambridge (GB); VAN DEN BROECK, Marc, Sint-Katelijne-Waver (BE)
(74) Representative: Whiting, Gary

(57) **Abstract**

An eyewear device and a method of folding an eyewear device is described, the eyewear device comprising: a frame comprising one or more lenses or displays; a first arm and a second arm, wherein the first arm is foldable with respect to the frame to a folded position to at least partially cover at least a first side of the frame, and the second arm is foldable with respect to the frame to a folded position to at least partially cover at least a second side of the frame, such that the first and second arms, in the folded positions, at least partially surround the frame. The method comprises: folding the first arm with respect to the frame to at least partially cover at least the first side of the frame; and folding the second arm with respect to the frame to at least partially cover at least the second side of the frame, such that the first and second arms, in the folded positions, at least partially surround the frame.

## Description

### Field

The present specification relates to an eyewear device, such as glasses or smart-glasses.

### Background

Eye glasses or other eyewear devices maybe fragile and expensive. There remains a need for improvement in techniques for protecting eyewear devices.

### Summary

In a first aspect, this specification provides an eyewear device comprising: a frame comprising one or more lenses or displays; a first arm and a second arm, wherein the first arm is foldable with respect to the frame to a folded position to at least partially cover at least a first side of the frame, and the second arm is foldable with respect to the frame to a folded position to at least partially cover at least a second side of the frame, such that the first and second arms, in the folded positions, at least partially surround the frame.

Some examples include a first hinge for folding the first arm with respect to the frame, and a second hinge for folding the second arm with respect to the frame. In some examples, the first hinge provides the first arm with a rotating angle of substantially 360 degrees. In some examples, the first hinge provides the first arm with a rotating angle of substantially 270 degrees. In some examples, the second hinge provides the second arm with a rotating angle of substantially 90 degrees.

In some examples, the first arm comprises a first element, the first element being extendable (e.g. slideable or foldable) with respect to the first arm, such that, when the first arm is in the folded position, more of the first side of the frame is covered when the first element is extended than when the first element is not extended.

In some examples, the second arm comprises a second element, the second element being extendable (e.g. slideable or foldable) with respect to the second arm, such that, when the second arm is in the folded position, more of the second side of the frame is covered when the second element is extended than when the second element is not extended. In some examples, each arm has a hinge end and a distal end, wherein said extendable element is at the distal end of the respective arm.

Some examples include at least one third hinge, wherein the third hinge allows at least partially changing shape of the frame. By way of example, the shape of the frame may be changes so that it is adjusted to the user's head. The said third hinge maybe positioned at a nose support section of the frame.

Some examples include one or more locking mechanisms (e.g. one or more magnets) for locking at least one of the first arm and the second arm in the folded position.

In some examples, the first arm and the second arm are dimensioned such that, in the folded position, said one or more lenses or displays are completely covered by said arms.

In some examples, at least part of the first arm and at least part of the second arm are at least as wide as said lenses or displays, such that, the first arm and the second arm at least partially prevent external light from impinging onto said lenses or displays when the eyewear device is in an unfolded position.

Some examples include the eyewear device further comprises electronic circuitry in one or more of: the frame; one or more of said arms; and one or more hinges.

In a second aspect, this specification provides a method of folding the eyewear device as described with respect to the first aspect, the method comprising: folding the first arm with respect to the frame to at least partially cover at least the first side of the frame; and folding the second arm with respect to the frame to at least partially cover at least the second side of the frame, such that the first and second arms, in the folded positions, at least partially surround the frame.

In some examples, the method further comprises extending a first element from the first arm, such that, when the first arm is in the folded position, more of the first side of the frame is covered when the first element is extended than when the first element is not extended; and/or extending a second element from the second arm, such that, when the second arm is in the folded position, more of the second side of the frame is covered when the second element is extended than when the second element is not extended.

In a third aspect, this specification provides an apparatus comprising means for performing: folding the first arm with respect to the frame to at least partially cover at least the first side of the frame; and folding the second arm with respect to the frame to at least partially cover at least the second side of the frame, such that the first and second arms, in the folded positions, at least partially surround the frame.

In some examples, the apparatus further comprises means for extending a first element from the first arm, such that, when the first arm is in the folded position, more of the first side of the frame is covered when the first element is extended than when the first element is not extended; and/or extending a second element from the second arm, such that, when the second arm is in the folded position, more of the second side of the frame is covered when the second element is extended than when the second element is not extended.

In a fourth aspect, this specification describes an apparatus configured to perform any method as described with reference to the second aspect.

### Brief description of the drawings

Example embodiments will now be described, by way of example only, with reference to the following schematic drawings, in which:
FIGs. 1 to 7 are illustrations of eyewear devices in accordance with example embodiments; and
FIGs. 8 and 9 are flowcharts of algorithms in accordance with example embodiments.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

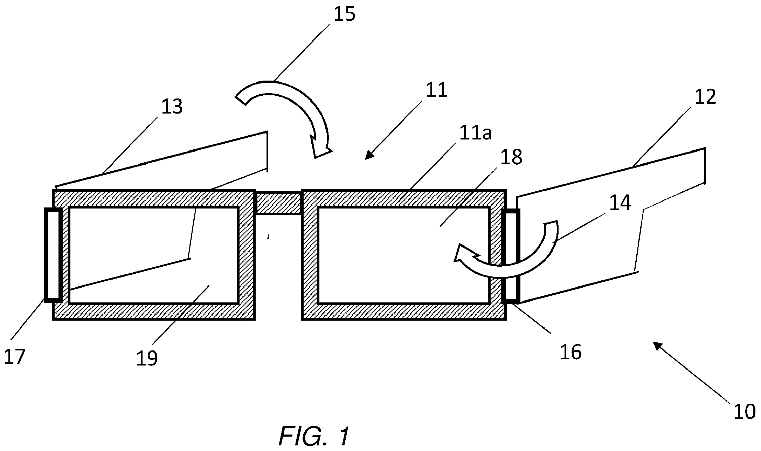

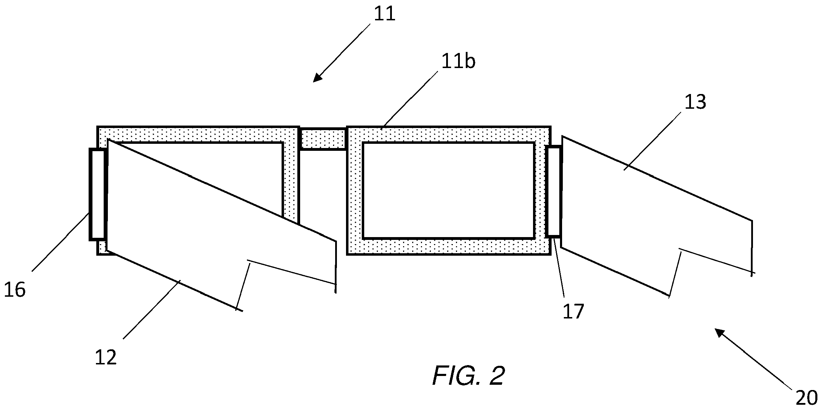

FIG. 1 is an illustration of an eyewear device, indicated generally by the reference numeral 10, in accordance with an example embodiment. The eyewear device 10 may, for example, be glasses, smart-glasses, virtual reality glasses, mixed reality or augmented reality glasses, a headset, head-mounted display, or the like. The eyewear device 10 comprises a frame, indicated generally by the reference numeral 11, where the frame may comprise one or more lenses or displays 18 and 19. The eyewear device 10 is shown in an orientation such that a first side 11a of the frame 11 is shown. The eyewear device 10 further comprises a first arm 12 and a second arm 13. The first arm 12 is foldable, as shown by an arrow 14, with respect to the frame 11 to a folded position to at least partially cover at least the first side 11a (shown by diagonal striped pattern) of the frame 11. The second arm 13 is foldable, as shown by an arrow 15, with respect to the frame 11 to a folded position to at least partially cover at least a second side (shown in FIG. 2) of the frame 11.

FIG. 2 is an illustration of an eyewear device, indicated generally by the reference numeral 20, in accordance with an example embodiment. The eyewear device 20 (similar to the eyewear device 10, e.g. in a different orientation) comprises the frame 11, the first arm 12, and the second arm 13. The eyewear device 20 is shown in an orientation such that a second side 11b (shown by dotted pattern) of the frame 11 is shown. As discussed above, the second arm 13 is foldable, with respect to the frame 11 to a folded position to at least partially cover at least a second side 11b of the frame 11.

The first arm 12 and the second arm 13 may be foldable such that the first and second arms 12 and 13, in the folded positions, at least partially surround the frame 11.

For example, the first and second arms 12 and 13 at least partially surrounding the frame 11 may provide a self-protecting mechanism at the eyewear device 10 or 20, such that the eyewear device 10 or 20 may not require an additional storage case (e.g. box) for protection. The surrounding of the frame may provide a protective enclosure to protect the eyewear device, especially fragile parts (e.g. the lenses or display made of glass) of the eyewear device.

It should be appreciated that the first arm 12 and the second arm 13 are not limited to being foldable to cover the first side 11a and the second side 11b respectively, such that the first arm 12 may be rotatable to cover either one of the first side 11a or second side 11b, and the second arm 13 may be rotatable to cover either one of the first side 11a or second side 11b.

In an example embodiment, the eyewear device (10, 20) comprises a first hinge 16 for folding the first arm 12 with respect to the frame 11, and comprises a second hinge 17 for folding the second arm 13 with respect to the frame 11. In an example embodiment, the hinges 16 and/or 17 may be optional; for example, the frame 11 and/or arms 12 and/or 13 may be made of flexible material, allowing the arms 12 and/or 13 to be foldable with respect to the frame without a hinge.

In an example embodiment, the first hinge 16 provides the first arm 12 with a rotating angle of substantially (or approximately) 360 degrees. For example, with the rotating angle of the order of 360 degrees, the first arm 12 may be folded towards the first side 11a to be substantially parallel to the frame 11 and at least partially cover the first side 11a, or the first arm 12 may be folded towards the second side 11b to be substantially parallel to the frame 11 and at least partially cover the second side 11b.

In an example embodiment, the first hinge 16 provides the first arm 12 with a rotating angle of substantially (or approximately) 270 degrees. For example, with the rotating angle of the order of 270 degrees, the first arm 12 may be folded towards the first side 11a to be substantially parallel to the frame 11 and at least partially cover the first side 11a.

In an example embodiment, the second hinge 17 provides the second arm 12 with a rotating angle of substantially (or approximately) 90 degrees. For example, with the rotating angle of the order of 90 degrees, the second arm 13 may be folded towards the second side 11b to be substantially parallel to the frame 11 and at least partially cover the second side 11b.

In an example embodiment, the second hinge 17 provides the second arm 12 with a rotating angle of substantially (or approximately) 360 degrees. For example, with the rotating angle of the order of 360 degrees, the second arm 12 may be folded towards the first side 11a to be substantially parallel to the frame 11 and at least partially cover the first side 11a, or the first arm 12 may be folded towards the second side 11b to be substantially parallel to the frame 11 and at least partially cover the second side 11b.

In an example embodiment, at least part of the first arm 12 and at least part of the second arm 13 are at least as wide as the lenses or displays 18 and 19. This may allow the first arm 12 and the second arm 13 to at least partially prevent external light from impinging onto said lenses or displays 18 and 19 when the eyewear device is in an unfolded position (i.e. the configurations shows in FIGS. 1 and 2). For example, the eyewear device 10 is shown in an unfolded position, such that the eyewear device 10 may be in said unfolded position when the eyewear device 10 is worn (e.g. in use) by a user or wearer. For example, the width of the first arm 12, at least at the end (hinge end) that is nearer to the hinge 16, is more than or equal to the width of the lens or display 18; the width of the second arm 13, at least at the end (hinge end) that is nearer to the hinge 17, is more than or equal to the width of the lens or display 19. As external light is at least partially prevented from impinging onto the lenses or displays (e.g. at least from the sides) by the arms, a darker inner environment (e.g. between a user or wearer's eyes and the lenses or displays) may be provided. For example, the darker environment may improve visibility of digital images projected on the lenses or displays. The darker environment may further allow power saving at the lenses or displays, as the brightness level, and thus the power consumption, at the lenses or displays, needed for a certain image contrast may be lower compared to a brighter environment.

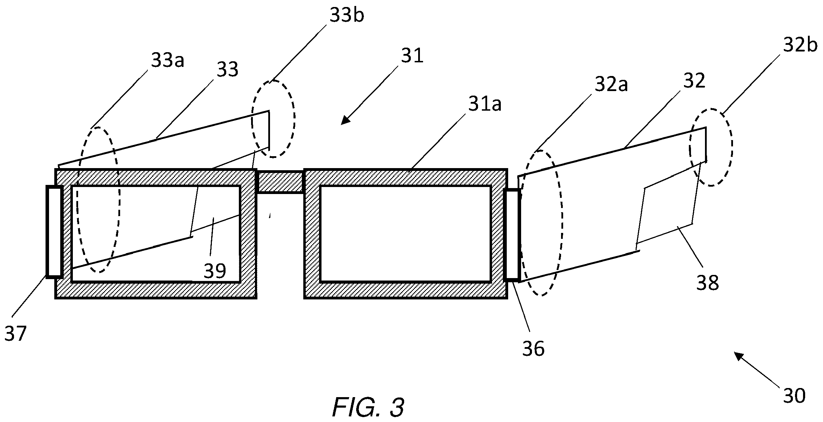

FIG. 3 is an illustration of an eyewear device, indicated generally by the reference numeral 30, in accordance with an example embodiment. The eyewear device 30 comprises a frame 31 (similar to frame 11, for example, comprising one or more lenses or glasses), first and second arms 32 and 33 (similar to first and second arms 12 and 13 respectively), and hinges 36 and 37 (similar to hinges 16 and 17 respectively). A first side 31a (shown by diagonal striped pattern, similar to the first side 11a) of the frame 31 is shown in eyewear device 30.

The first arm 32 further comprises a first element 38. The first element 38 is extendable (e.g. slideable or foldable) with respect to the first arm 32, such that, when the first arm 32 is in the folded position, more of the first side 31a of the frame is covered when the first element 38 is extended than when the first element 38 is not extended. For example, when the first arm 32 is folded to be substantially parallel to the frame 31 and to cover at least the first side 31a, the first element 38 may be extended (e.g. slid out or folded out) such that at least the lenses or glasses of the frame 31 are substantially covered at the first side 31a.

The second arm 33 further comprises a second element 39. The second element 39 is extendable (e.g. slideable or foldable) with respect to the second arm 33, such that, when the second arm 33 is in the folded position, more of the second side of the frame is covered when the second element 39 is extended than when the second element 39 is not extended. For example, when the second arm 33 is folded to be substantially parallel to the frame 31 and to cover at least the second side of the frame, the second element 39 may be extended (e.g. slid out or folded out) such that at least the lenses or glasses of the frame 31 are substantially covered at the second side.

In an example embodiment, each arm has a hinge end and a distal end. The extendable portion, such as the first element 38 or the second element 39, is provided at the distal end of the respective arm. For example, the first arm 32 has a hinge end 32a and a distal end 32b, such that the first element 38 is at the distal end 32b. Similarly, the second arm 33 has a hinge end 33a and a distal end 33b, such that the second element 39 is at the distal end 33b.

In one example embodiment, when the first element 38 and the second element 39 are not extended, the distal end 32b of the first arm 32 and the distal end 33b of the second arm 33 may be shaped so as to be suspended on the ear of a user or wearer when the eyewear device is worn.

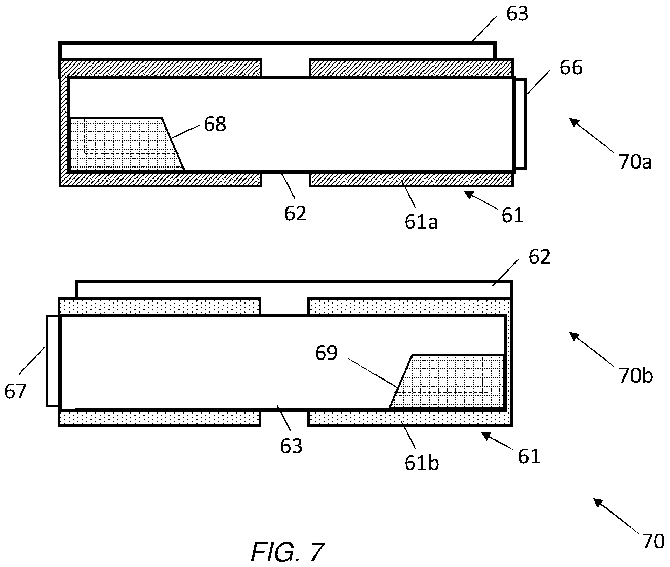

The first and second arms in the folded position are illustrated further in FIG. 7, as discussed further below. Thus, FIG. 7 further illustrates how the first side and/or the second side of the eyewear device are at least partially, or substantially, covered by the first arm and the second arm in folded positions respectively.

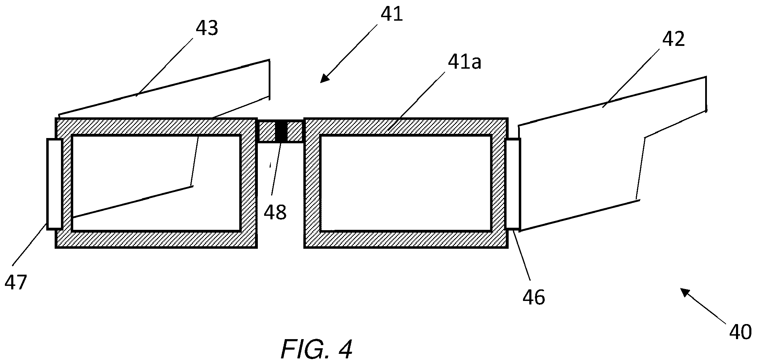

FIG. 4 is an illustration of an eyewear device, indicated generally by the reference numeral 40, in accordance with an example embodiment. The eyewear device 40 (similar to eyewear devices 10, 20, and 30) comprises a frame 41 (showing a first side 41a), a first arm 42, a second arm 43, a first hinge 46, and a second hinge 47 (similar to frames 11, 31; first arms 12, 32; second arms 13, 33; first hinges 16, 36; and second hinges 17, 37, respectively). The eyewear device 40 further comprises at least one third hinge 48. The third hinge 48 may allow at least partially changing shape of the frame 41. For example, the third hinge 48 may be positioned at a nose support section of the frame 41 (e.g. the portion of the frame that rests on a nose of the user or wearer when the eyewear device 40 is worn by the user or wearer). In one example, the third hinge 48 may allow at least partial bending of the frame 41 so as to be adjusted to the face or head of the user or wearer (e.g. at least partially curving the frame 41 so that the frame 41 fits better on the user's or wearer's face or head, rather than the frame 41 being fully flat). When the eyewear device 41 is not in use, or is intended to be stored away, the hinge 48 may be used for making the frame 41 substantially flat (e.g. thus allowing the eyewear device 40 to be in a compact shape, for example, with the flat frame and the arms in folded position). In one example, there may be more than one third hinges 48, positioned at any portion of the frame 41, thus allowing the frame 41 to have higher flexibility in shape.

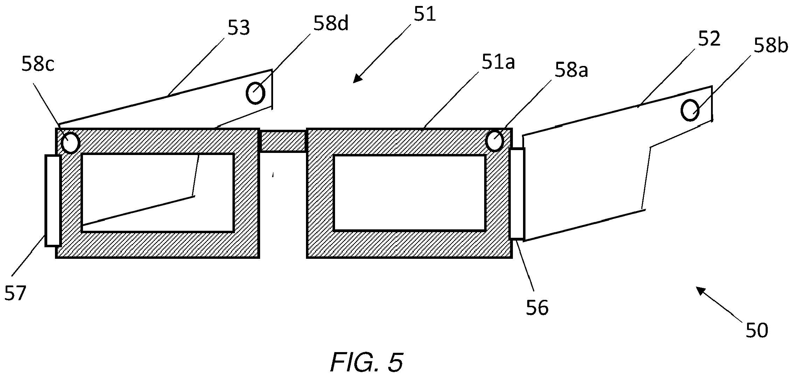

FIG. 5 is an illustration of an eyewear device, indicated generally by the reference numeral 50, in accordance with an example embodiment. The eyewear device 50 (similar to eyewear devices 10, 20, 30, and 40) comprises a frame 51 (showing a first side 51a), a first arm 52, a second arm 53, a first hinge 56, and a second hinge 57 (similar to frames 11, 31, 41; first arms 12, 32, 42; second arms 13, 33, 43; first hinges 16, 36, 46; and second hinges 17, 37, 47 respectively). The eyewear device 50 further comprises one or more locking mechanisms 58 for locking the first arm 52 and/or the second arm 53 in the folded positions. For example, the locking mechanisms 58 include one or more of locking mechanisms 58a (e.g. provided at a corner of the frame 51 near the hinge 56), 58b (e.g. provided at a distal end of the first arm 52), 58c (e.g. provided at another corner of the frame 51 near the hinge 57), and 58d (e.g. provided at a distal end of the second arm 53). For example, locking mechanisms 58b and 58c may be positioned to be aligned with each other when the first arm 52 is in a folded position, at least partially covering the first side 51a of the frame 51, such that the first arm 52 is locked in the folded position by the locking mechanisms 58b and 58c. Similarly, locking mechanisms 58a and 58d may be positioned to be aligned with each other when the second arm 53 is in a folded position, at least partially covering the second side of the frame 51, such that the second arm 53 is locked in the folded position by the locking mechanisms 58a and 58d.

In one example embodiment, the locking mechanisms 58 comprise magnets. For example, the locking mechanisms 58b and 58c comprise magnets that are attracted to each other, such that when the first arm 52 is in the folded position, the magnets are aligned and attracted to lock the first arm 52 in the folded position so as to at least partially cover the first side 51a of the frame 51. Similarly, for example, the locking mechanisms 58a and 58d comprise magnets that are attracted to each other, such that when the second arm 53 is in the folded position, the magnets are aligned and attracted to lock the second arm 53 in the folded position so as to at least partially cover the second side of the frame 51. Alternatively, or in addition, the locking mechanisms 58 may comprise one or more of snap button pairs, toggle latch pairs, or other similar mechanical fastening tools. For example, the locking mechanisms 58b and 58c make a single pair (e.g. aligned with each other, and locking together), and the locking mechanisms 58a and 58d make another pair (e.g. aligned with each other, and locking together).

In an example embodiment, the eyewear devices 10, 20, 40, and 50 may further comprise extendable portions, similar to first element 38 and second element 39, where said extendable portions may be in unextended positions, and therefore may not be visible in the illustrations of eyewear devices 10, 20, 40, and 50.

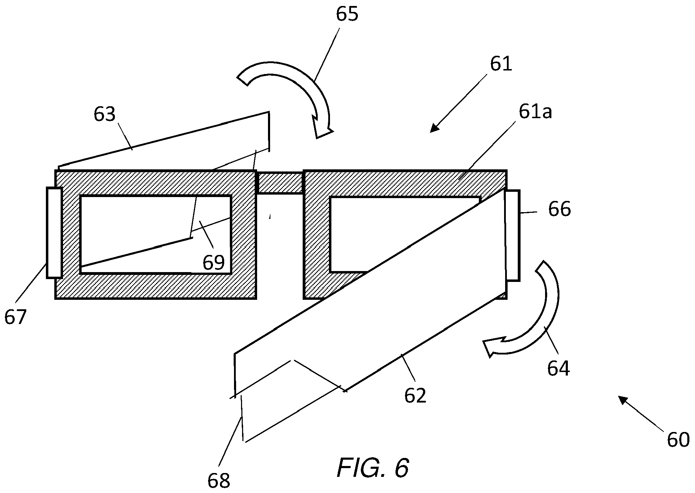

FIG. 6 is an illustration of an eyewear device, indicated generally by the reference numeral 60, in accordance with an example embodiment. The eyewear device 60 (similar to eyewear devices 10, 20, 30, 40 and 50) comprises a frame 61 (showing a first side 61a), a first arm 62, a second arm 63, a first hinge 66, and a second hinge 67 (similar to frames 11, 31, 41, 51; first arms 12, 32, 42, 52; second arms 13, 33, 43, 53; first hinges 16, 36, 46, 56; and second hinges 17, 37, 47, 57 respectively). The first arm 62 comprises a first element 68 and the second arm 63 comprises a second element 69, where the first element 68 and second element 69 are extendable (e.g. foldable or slideable) with respect to the first arm 62 and second arm 63 respectively, and the first and second elements 68 and 69 are shown in extended positions.

The eyewear device 60 illustrates how the first arm 62 and the second arm 63 may be folded in order to cover the first side 61a and the second side of the frame 61 respectively. For example, the orientations of the eyewear devices 10, 20, 30, 40, and 50 may be considered to be an unfolded position, where the respective first arms and second arms are substantially perpendicular to the respective frames. From said unfolded position, the first arm 62 may be folded about the hinge 66, as shown by the arrow 64, by about 270 degrees with respect to the frame 61. Similarly, from said unfolded position, the second arm 63 may be folded about the hinge 67, as shown by the arrow 65, by about 90 degrees with respect to the frame 61. Once the first arm 62 and the second arm 63 are folded fully in the directions shown by the arrows 64 and 65 to be in folded positions, the eyewear device 60 may at least partially be surrounded by the first arm 62 and second arm 63 (e.g. as illustrated in FIG. 7).

FIG. 7 is an illustration of an eyewear device, indicated generally by the reference numeral 70, in accordance with an example embodiment. The eyewear device 70 is shown in a first view 70a and a second view 70b. The eyewear device 70, similar to the eyewear device 60, comprises the frame 61, first arm 62, second arm 63, first hinge 66, second hinge 67, first element 68, and second element 69 (similar to frames 11, 31, 41, 51; first arms 12, 32, 42, 52; second arms 13, 33, 43, 53; first hinges 16, 36, 46, 56; second hinges 17, 37, 47, 57; first element 38; and second element 39, respectively).

The first view 70a shows at least part of the first side 61a of the eyewear device 70, and the second view 70b shows at least part of a second side 61b of the eyewear device 70.

As seen from the view 70a, the first arm 62 and second arm 63 are in folded positions, such that the first side 61a is at least partially covered by the first arm 62. Furthermore, the first arm 62 is dimensioned such that, in the folded position, and with the first element 68 in extended position, the lenses or displays of the eyewear device 70 are completely covered at the first side 61a by the first arm 62.

As seen from the view 70b, the first arm 62 and second arm 63 are in folded positions, such that the second side 61b is at least partially covered by the second arm 63. Furthermore, the second arm 63 is dimensioned such that, in the folded position, and with the first element 68 in extended position, the lenses or displays of the eyewear device 70 are completely covered at the second side 61b by the second arm 63.

In one example embodiment, if the first element 68 was not in an extended position (e.g. in view 70a), the portion shown in dotted squares pattern may not be covered by the first arm 62, and thus part of the frame falling in that portion may be exposed. Similarly, if the second element 69 was not in an extended position (e.g. in view 70b), the portion shown in dotted squares pattern may not be covered by the second arm 63, and thus part of the frame falling in that portion may be exposed. Therefore, more of the first side 61a of the frame 61 is covered when the first element 68 is extended than when the first element 68 is not extended, and more of the second side 61b of the frame 61 is covered when the second element 69 is extended than when the second element 69 is not extended.

As seen in views 70a and 70b, the arms 62 and 63 in the folded position provide an enclosure of the frame 61, such that the eyewear device 70 may not require an additional storage case (e.g. box) for protection. The surrounding of the frame 61 may provide a protective enclosure to protect the eyewear device 70, especially fragile parts (e.g. the lenses or display made of glass) of the eyewear device 70.

In an example embodiment, the eyewear device (10, 20, 30, 40, 50, 60, 70) may comprise electronic circuitry in one or more of: the frame (11, 31, 41, 51, 61); one or more of said arms (12, 13, 32, 33, 42, 43, 52, 53, 62, 63); and one or more hinges (16, 17, 36, 37, 46, 47, 56, 57, 66, 67). For example, the electronic circuitry may comprise electric connectors (e.g. input/output (I/O) connectors) for data transfer, power supply, and/or other electronic functions of the eyewear device. For example, the eyewear device may be smart glasses comprising electronic circuitry including one or more of audio component(s), visual component(s), processing module(s), user interface module(s), connecting modules for connecting plurality of other modules, or the like. In one example, the first and second arms in the folded positions also provide protection for the electronic circuitry of the eyewear device.

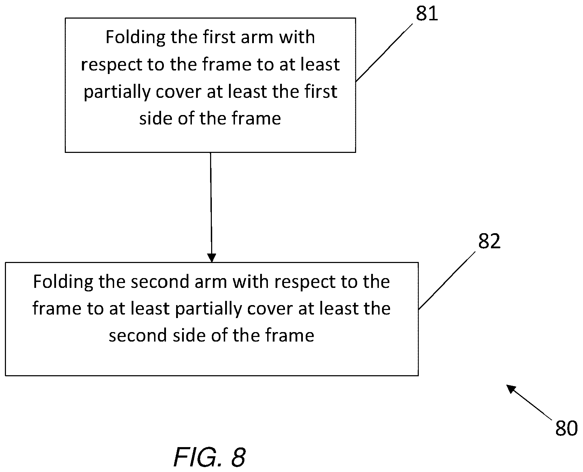

FIG. 8 is a flowchart of an algorithm, indicated generally by the reference numeral 80, in accordance to an example embodiment. The algorithm 80 may correspond to a method of folding an eyewear device, such as any one of eyewear devices 10, 20, 30, 40, 50, 60, and 70. At operation 81, the first arm (12, 32, 42, 52, 62) is folded (e.g. as shown by arrows 14 and 64, e.g. by an angle of 270 degrees) with respect to the frame (11, 31, 41, 51, 61) to at least partially cover at least the first side (11a, 31a, 41a, 51a, 61a) of the frame. Next, at operation 82, the second arm (13, 33, 43, 53, 63) is folded (e.g. as shown by arrows 15 and 65, e.g. by an angle 90 degrees) with respect to the frame to at least partially cover at least the second side (11b, 61b) of the frame. The operations 81 and 82 may be performed in a different order, for example, by performing operation 82 before operation 81, or at the same time. The operations 81 and 82 are performed such that the first and second arms, in the folded positions, at least partially surround the frame.

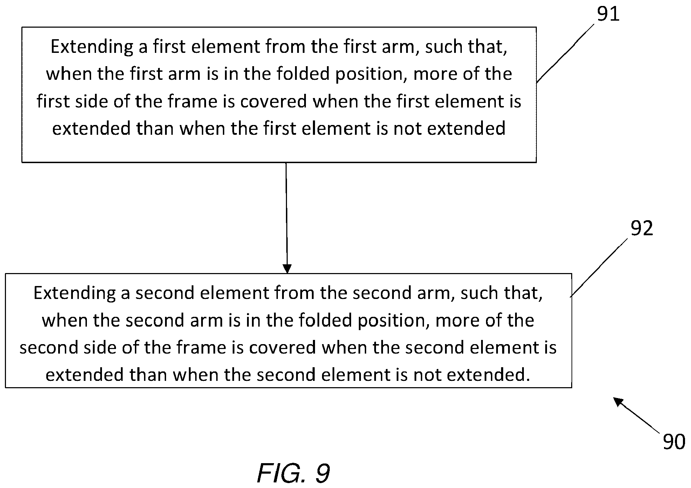

FIG. 9 is a flowchart of an algorithm, indicated generally by the reference numeral 90, in accordance to an example embodiment. The algorithm 90 may correspond to operations for a method of folding an eyewear device, such as any one of eyewear devices 10, 20, 30, 40, 50, 60, and 70. For example, the operations of algorithm 90 may be performed after the operations of algorithm 80. Alternatively, operations of algorithm 90 may be performed before, or during, the operations of algorithm 80.

At operation 91, a first element (38, 68) is extended from the first arm, such that, when the first arm is in the folded position, more of the first side of the frame is covered when the first element is extended than when the first element is not extended (e.g. as described with reference to FIG. 7).

At operation 92, a second element (39, 69) is extended from the second arm, such that, when the second arm is in the folded position, more of the second side of the frame is covered when the second element is extended than when the second element is not extended (e.g. as described with reference to FIG. 7).

The operations 91 and 92 may be performed in a different order, for example, by performing operation 92 before operation 91, or at the same time.

In an example embodiment, one or more of the operations of algorithms 80 and 90 may be performed either manually by a user or wearer, or may be performed (e.g. automatically) upon receiving user instructions from a user or wearer (e.g. receiving instructions through a user interface, such as a button on the eyewear device, by sensing user gestures, or by receiving instructions from a remote device through a network interface or processing module). Alternatively, or in addition, the operations may be performed in response to a trigger (e.g. sensing that the eyewear device is no longer being worn or in use by the user or wearer).

It should be appreciated that the eyewear device may be of any other shape or form, and that the illustrations of FIGs. 1 to 7, are examples only.

If desired, the different functions discussed herein may be performed in a different order and/or concurrently with each other. Furthermore, if desired, one or more of the above-described functions may be optional or may be combined. Similarly, it will also be appreciated that the flow charts of Figures 8 and 9 are examples only and that various operations depicted therein may be omitted, reordered and/or combined. It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. An eyewear device comprising:
a frame comprising one or more lenses or displays;
a first arm and a second arm, wherein the first arm is foldable with respect to the frame to a folded position to at least partially cover at least a first side of the frame, and the second arm is foldable with respect to the frame to a folded position to at least partially cover at least a second side of the frame, such that the first and second arms, in the folded positions, at least partially surround the frame.

2. An eyewear device as claimed in claim 1, further comprising a first hinge for folding the first arm with respect to the frame, and a second hinge for folding the second arm with respect to the frame.

3. An eyewear device as claimed in claim 2, wherein the first hinge provides the first arm with a rotating angle of substantially 360 degrees.

4. An eyewear device as claimed in claim 2, wherein the first hinge provides the first arm with a rotating angle of substantially 270 degrees.

5. An eyewear device as claimed in any one of claims 2 to 4, wherein the second hinge provides the second arm with a rotating angle of substantially 90 degrees.

6. An eyewear device as claimed in any one of the preceding claims, wherein:
the first arm comprises a first element, the first element being extendable with respect to the first arm, such that, when the first arm is in the folded position, more of the first side of the frame is covered when the first element is extended than when the first element is not extended.

7. An eyewear device as claimed in any one of the preceding claims, wherein:
the second arm comprises a second element, the second element being extendable with respect to the second arm, such that, when the second arm is in the folded position, more of the second side of the frame is covered when the second element is extended than when the second element is not extended.

8. An eyewear device as claimed in claim 6 or claim 7, wherein each arm has a hinge end and a distal end, wherein said extendable element is at the distal end of the respective arm.

9. An eyewear device as claimed in any one of the preceding claims, further comprising at least one third hinge, wherein the third hinge allows at least partially changing shape of the frame.

10. An eyewear device as claimed in any one of the preceding claims, further comprising one or more locking mechanisms for locking at least one of the first arm and the second arm in the folded position.

11. An eyewear device as claimed in any one of the preceding claims, wherein the first arm and the second arm are dimensioned such that, in the folded position, said one or more lenses or displays are completely covered by said arms.

12. An eyewear device as claimed in any one of the preceding claims, wherein at least part of the first arm and at least part of the second arm are at least as wide as said lenses or displays, such that, the first arm and the second arm at least partially prevent external light from impinging onto said lenses or displays when the eyewear device is in an unfolded position.

13. An eyewear device as claimed in any one of the preceding claims, wherein the eyewear device further comprises electronic circuitry in one or more of: the frame; one or more of said arms; and one or more hinges.

14. A method of folding the eyewear device as claimed in any one of claims 1 to 14, comprising:
folding the first arm with respect to the frame to at least partially cover at least the first side of the frame; and
folding the second arm with respect to the frame to at least partially cover at least the second side of the frame, such that the first and second arms, in the folded positions, at least partially surround the frame.

15. A method as claimed in claim 14, further comprising:
extending a first element from the first arm, such that, when the first arm is in the folded position, more of the first side of the frame is covered when the first element is extended than when the first element is not extended; and/or
extending a second element from the second arm, such that, when the second arm is in the folded position, more of the second side of the frame is covered when the second element is extended than when the second element is not extended.
